# EUROPEAN PATENT APPLICATION

(11) **EP 4 446 750 A1**
(43) Date of publication of application: **16.10.2024**
(21) Application number: 22903841.9
(22) Date of filing: 07.10.2022
(51) Int. Cl.: G01N 35/10

(54) **AUTOMATIC ANALYSIS DEVICE CONTROL METHOD, AND AUTOMATIC ANALYSIS DEVICE**

(30) Priority: 07.12.2021 JP 2021198200
(71) Applicant: HITACHI HIGH-TECH CORPORATION, Tokyo 105-6409 (JP)
(72) Inventor: FEI, Wenxi, Tokyo 105-6409 (JP); IWASA, Sho, Tokyo 105-6409 (JP); KANAI, Daisuke, Tokyo 105-6409 (JP)
(74) Representative: MERH-IP Matias Erny Reichl Hoffmann Patentanwälte PartG mbB
(86) International application number: PCT/JP2022/037616
(87) International publication number: WO 2023/105907

(57) **Abstract**

In an automatic analyzer, detection sensitivity in flow rate measurement in a cleaning system having a low pressure and a low flow rate is improved. The present disclosure proposes a control method for an automatic analyzer including a liquid feed pump that feeds, through a flow path, a cleaning liquid to a cleaning mechanism of a dispensing nozzle, and a control unit that controls an operation of the liquid feed pump. The control method includes: operating, by the control unit, the liquid feed pump to feed the cleaning liquid to a low-pressure flow path having a low pressure and a low flow rate, the low-pressure flow path constituting at least a part of the flow path; and operating, by the control unit, a flow rate estimation mechanism provided in the low-pressure flow path to obtain a flow rate estimation value in the low-pressure flow path.

## Description

### Technical Field

The present disclosure relates to a control method for an automatic analyzer, and an automatic analyzer.

### Background Art

An automatic analyzer, for example, a biochemical automatic analyzer, analyzes components of a biological sample (hereinafter referred to as a "sample") such as serum or urine. In such a biochemical automatic analyzer, generally, a sample and a reagent are dispensed into a reaction container using a dispensing nozzle and reacted with each other, and a change in color tone or turbidity generated in a reaction solution is optically measured by a photometry unit such as a spectrophotometer. Therefore, contamination or the like of the nozzle affects dispensing accuracy, and as a result, also affects reliability of the automatic analyzer. Therefore, after dispensing a sample or the like, the sample or the like adhering to an outer wall or an inner side of the nozzle is cleaned using a cleaning liquid.

For example, PTL 1 discloses that "The cleaning liquid circulates around the outside of the probe through the cleaning cell to clean the outside of the probe more thoroughly. Similarly, it is known to cause the cleaning liquid to flow through the probe. The cleaning liquid is preferably divided by a plurality of continuous bubbles, and the bubbles are likely to rub against an inner surface of the probe when the bubbles pass through the probe, and further promote removal of a carried substance".

### Citation List

### Patent Literature

PTL 1: JPH06-43723Y

### Summary of Invention

### Technical Problem

In an automatic analyzer, when performance of a pump that supplies a cleaning liquid for cleaning a nozzle deteriorates due to aging or a flow path from the pump, to a discharge port of the cleaning liquid is clogged, a flow rate of the cleaning liquid changes. When a cleaning liquid amount is small, for example, the nozzle cannot be sufficiently cleaned and a carryover or the like may occur. In order to cope with such a change in the cleaning liquid amount, generally, a pressure of the flow path is mainly measured to detect an abnormality.

Such an abnormality detection technique based on pressure measurement is applied to a flow path having a relative high pressure and a high flow rate, and cannot be applied to a flow path having a low pressure and a low flow rate. In recent years, attempts are made to introduce a cleaning system having a low pressure and a low flow rate, but in the related art as in PTL 1, no study is made on detection sensitivity in a cleaning system having a low pressure and a low flow rate.

In view of such a situation, the present disclosure proposes a technique for improving detection sensitivity in flow rate measurement in a cleaning system having a low pressure and a low flow rate in an automatic analyzer.

### Solution to Problem

In order to solve the above problems, for example, a configuration described in the claims is adopted.

The present disclosure includes a plurality of methods for solving the above problems, and for example, the present disclosure proposes a control method for an automatic analyzer including a liquid feed pump that feeds, through a flow path, a cleaning liquid to a cleaning mechanism of a dispensing nozzle, and a control unit that controls an operation of the liquid feed pump, in which the control method includes operating, by the control unit, the liquid feed pump to feed the cleaning liquid to a low-pressure flow path having a low pressure and a low flow rate, the low-pressure flow path constituting at least a part of the flow path, and operating, by the control unit, a flow rate estimation mechanism provided in the low-pressure flow path to obtain a flow rate estimation value in the low-pressure flow path.

Additional features related to the present disclosure will be clarified based on the description of the present description and the accompanying drawings. Aspects of the present disclosure may be achieved and implemented using elements, combinations of various elements, the following detailed description, and accompanying claims.

It is necessary to understand that description of the present description is merely a typical example, and is not intended to limit the scope of the claims or application examples of the present disclosure in any way.

### Advantageous Effects of Invention

According to the present disclosure, detection sensitivity in flow rate measurement in a cleaning system having a low pressure and a low flow rate can be improved in an automatic analyzer.

### Brief Description of Drawings

[FIG. 1] FIG. 1 is a diagram showing an overall schematic configuration example of an automatic analyzer 100 according to the present embodiment.
[FIG. 2] FIG. 2 is a diagram showing a schematic configuration example of a cleaning flow path of a dispensing mechanism (sample dispensing mechanism 105) in the automatic analyzer 100 according to the present embodiment.
[FIG. 3] FIG. 3 is a flowchart showing dispensing operation control processing according to the present embodiment.
[FIG. 4] FIG. 4 is a flowchart showing flow rate adjustment processing according to the present embodiment.

### Description of Embodiments

The present embodiment discloses a technique of estimating a flow rate in a cleaning system having a low pressure and a low flow rate (for example, an outer cleaning flow path) in an automatic analyzer, detecting a cleaning abnormality based on the estimated flow rate, and adjusting a flow rate of a liquid feed pump. In the present embodiment, a low pressure can be defined as, for example, 10 kPa or less, and a low flow rate can be defined as a flow rate due to liquid feeding at a low pressure (10 kPa). A high pressure can be defined as 100 kPa or more.

Hereinafter, an embodiment of the present disclosure will be described with reference to the accompanying drawings. In the accompanying drawings, functionally the same elements may be denoted by the same reference numerals. The accompanying drawings show specific embodiments and implementation examples according to the principle of the disclosure, but the embodiments and the implementation examples are provided for understanding the present disclosure and are not by no means to be used to limit the present disclosure.

### <Configuration Example of Automatic Analyzer>

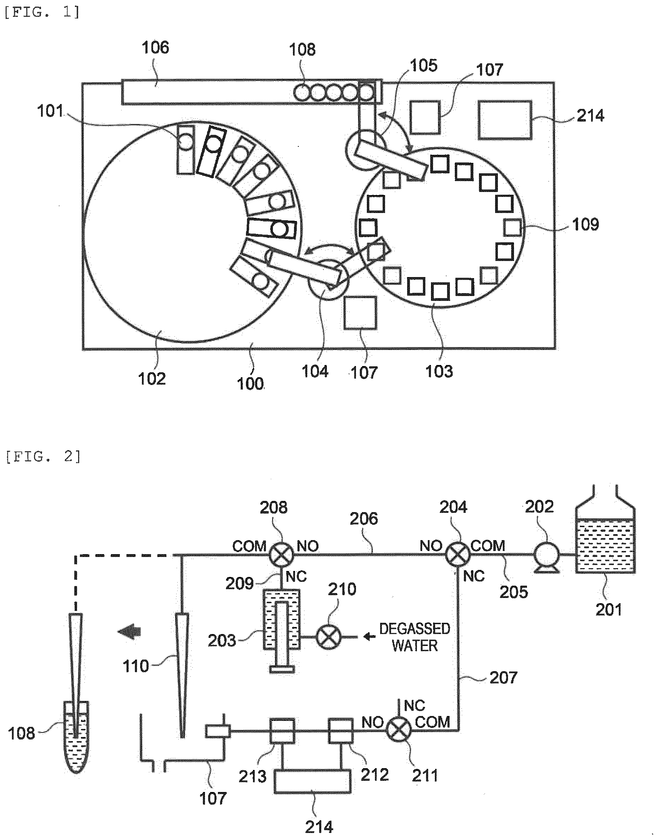

FIG. 1 is a diagram showing an overall schematic configuration example of an automatic analyzer 100 according to the present embodiment. The automatic analyzer 100 includes a reagent disk 102 on which a plurality of reagent containers 101 are mounted, a reaction disk 103 that mixes a reagent with a sample to measure a reaction, a reagent dispensing mechanism 104 that aspirates and discharges a reagent, a sample dispensing mechanism 105 that aspirates and discharges a sample, and a control unit (a processor) 214 that controls opening and closing of a liquid feed pump 202 and valves (see FIG. 2). The automatic analyzer 100 may include other components.

The reagent dispensing mechanism 104 includes a reagent nozzle (not shown) for dispensing a reagent. The sample dispensing mechanism 105 includes a sample dispensing nozzle 110 for dispensing a sample.

A sample loaded into the automatic analyzer is loaded into a sample container (a test tube) 108 and is transported by being mounted on a rack 106. A plurality of sample containers 108 are mounted on the rack 106. The sample is urine or a sample derived from blood such as serum or whole blood.

The sample dispensing mechanism 105 moves, by a rotation operation, the sample dispensing nozzle 110 to an aspiration position at which a sample is aspirated from the sample container 108, a discharge position at which the sample is discharged to a cell 109, and a cleaning position at which a tip end of the sample dispensing nozzle 110 is cleaned in a cleaning tank 107.

Further, the sample dispensing mechanism 105 lowers the sample dispensing nozzle 110 according to heights of the sample container 108, the cell 109, and the cleaning tank 107 at the aspiration position, the discharge position, and the cleaning position. The sample dispensing nozzle 110 and the reagent nozzle are provided with a liquid contact detection sensor for detecting a liquid surface, and contacting with a target liquid (a sample or a reagent) can be confirmed based on a sensor signal.

The automatic analyzer 100 measures a mixed liquid of a sample and a reagent contained in the cell 109 to analyze a concentration of a predetermined component in the sample. A general configuration of the automatic analyzer 100 is described above.

### <Configuration Example of Cleaning System Flow Path>

Although a cleaning system flow path of the sample dispensing nozzle 110 is described as an example in the present embodiment, the technique according to the present embodiment can also be applied to a case of a reagent nozzle in which the same nozzle is cleaned and repeatedly used. The present embodiment is also applicable to an apparatus for dispensing a sample and a reagent using the same nozzle.

FIG. 2 is a diagram showing a schematic configuration example of a cleaning flow path of a dispensing mechanism (the sample dispensing mechanism 105) in the automatic analyzer 100 according to the present embodiment.

A cleaning system flow path of the automatic analyzer 100 includes, for example, an inner cleaning flow path 206 and an outer cleaning flow path 207, and is implemented by a cleaning liquid storage container 201, the liquid feed pump 202 that feeds a cleaning liquid, the cleaning tank 107 for cleaning an outer wall of a nozzle, a sample syringe 203 for aspirating and discharging a sample, the sample dispensing nozzle (hereinafter, simply referred to as a dispensing nozzle) 110, a three-way electromagnetic valve 204 provided downstream of the liquid feed pump 202, and a three-way electromagnetic valve 208 provided upstream of the dispensing nozzle 110.

The three-way electromagnetic valve 204 selectively connects the inner cleaning flow path 206 for supplying a cleaning liquid into the dispensing nozzle 110 and the outer cleaning flow path 207 for supplying the cleaning liquid to the cleaning tank 107 for cleaning an outer wall of the dispensing nozzle 110 to a cleaning liquid supply flow path 205 for feeding the cleaning liquid by the liquid feed pump 202.

The three-way electromagnetic valve 208 switches a connection source of the dispensing nozzle 110. When the dispensing nozzle 110 is connected to the inner cleaning flow path 206, the cleaning liquid can be supplied to the dispensing nozzle 110 to clean the inside of the dispensing nozzle 110. When the dispensing nozzle 110 is connected to a dispensing flow path 209, a sample can be aspirated or discharged using the sample syringe 203. The sample syringe 203 and the dispensing flow path 209 are filled with degassed water supplied through a two-way electromagnetic valve 210.

A bubble generation unit implemented by a three-way electromagnetic valve 211 is provided at a predetermined position (upstream) of the outer cleaning flow path 207, and a bubble sensor 212 and a bubble sensor 213 are disposed at a constant interval downstream of the three-way electromagnetic valve 211. Bubbles (air) can be introduced into the outer cleaning flow path 207 through the three-way electromagnetic valve 211 (by opening an atmospheric relief valve NC), and the bubbles (a boundary surface between the cleaning liquid and air) are detected by the bubble sensors. Since the outer cleaning flow path 207 is a flow path that operates at a low pressure (for example, 10 kPa or less as described above) and a low flow rate, bubbles are less likely to collapse when the bubbles (air) are introduced into the outer cleaning flow path 207, and detection becomes easy. It is possible to avoid a risk of deteriorating dispensing accuracy due to bubbles mixing into the sample syringe 203.

### <Dispensing Operation Control Processing>

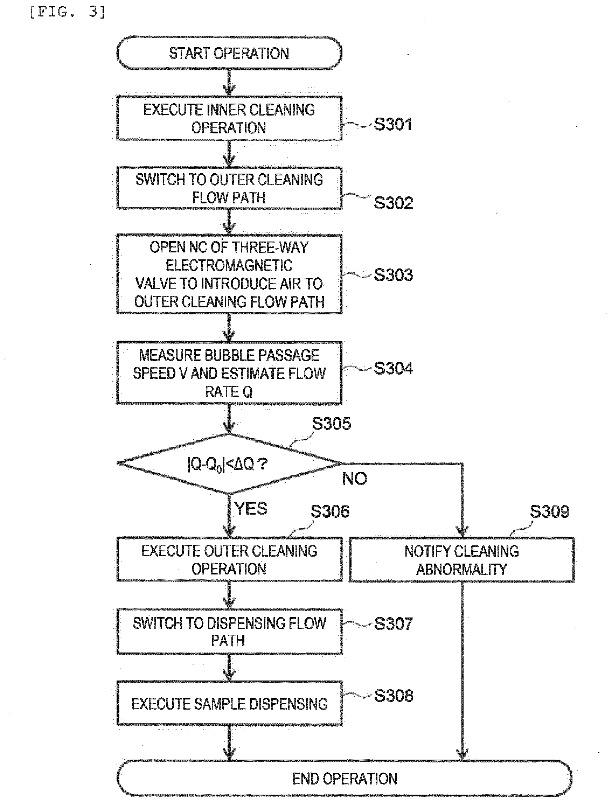

FIG. 3 is a flowchart showing dispensing operation control processing according to the present embodiment. The dispensing operation includes an inner cleaning operation, an outer cleaning operation, and a sample dispensing operation, and in the present embodiment, a flow rate of the liquid feed pump 202. is estimated during the outer cleaning operation.

### (i) Step 301

First, the control unit 214 operates the liquid feed pump 202 to supply the cleaning liquid from the cleaning liquid storage container 201 to the inner cleaning flow path 206 through the cleaning liquid supply flow path 205, and performs inner cleaning for the dispensing nozzle 110.

### (ii) Step 302

The control unit 214 switches the three-way electromagnetic valve 204 to connect the cleaning liquid supply flow path 205 to the outer cleaning flow path 207. When the outer cleaning flow path 207 is not filled with the cleaning liquid, the control unit 214 operates the liquid feed pump 202 to fill the outer cleaning flow path 207 (for example, a flow path up to the cleaning tank 107) with the cleaning liquid.

### (iii) Step 303

The control unit 214 switches the three-way electromagnetic valve 211 that is a bubble generation unit to an atmospheric relief side for a certain time. During this time, the cleaning liquid inside the outer cleaning flow path 207 is discharged from the cleaning tank 107 due to falling under own weight of the cleaning liquid.

### (iv) Step 304

Thereafter, the control unit 214 returns the three-way electromagnetic valve 211 to a closed state and causes the liquid feed pump 202 to feed the cleaning liquid. Then, a boundary surface between the cleaning liquid and air (may be a boundary surface between the cleaning liquid and air in a bubble) moves in the outer cleaning flow path. The control unit 214 obtains a time difference between a time at which the boundary surface between the cleaning liquid and air passes through the bubble sensor 212 and a time at which the boundary surface between the cleaning liquid and air passes through the bubble sensor 213, and calculates a bubble moving speed V (the number of bubble sensors may be one).

After the bubble moving speed V is calculated, the control unit 214 obtains an estimated flow rate Q based on a cross-sectional area S of the outer cleaning flow path 207 according to a flow rate estimation formula Q = V . S.

### (v) Step 305

The control unit 214 compares the estimated flow rate Q with a preset target flow rate Q₀ to determine whether the estimated flow rate Q is within a normal range. Specifically, it is determined whether |Q - Q₀| is less than a flow rate error allowable range ΔQ. When |Q - Q₀| < ΔQ (YES in step 305: the flow rate is within the normal range), the processing proceeds to step 306. On the other hand, when |Q - Q₀| ≥ ΔQ (NO in step 305: the flow rate is out of the normal range), the processing proceeds to step 309.

### (vi) Step 306

The control unit 214 operates the liquid feed pump 202 to supply the cleaning liquid to the outer cleaning flow path 207, and performs outer cleaning for the dispensing nozzle 110. The outer cleaning can be performed by spraying the cleaning liquid to a tip end of the dispensing nozzle 110 in the cleaning tank 107.

### (vii) Step 307

The control unit 214 controls the three-way electromagnetic valve 208 to close a cleaning liquid supply side and open a sample liquid supply side, thereby switching to a dispensing flow path.

### (viii) Step 308

The control unit 214 moves the dispensing nozzle 110 to the sample container 108 and performs a dispensing operation. When the dispensing operation is completed, the processing is ended.

### (ix) Step 309

The control unit 214 notifies of a cleaning abnormality (for example, notification by voice or notification by displaying a warning message on a display screen), and ends the processing without performing the dispensing operation.

### <Flow Rate Adjustment Operation>

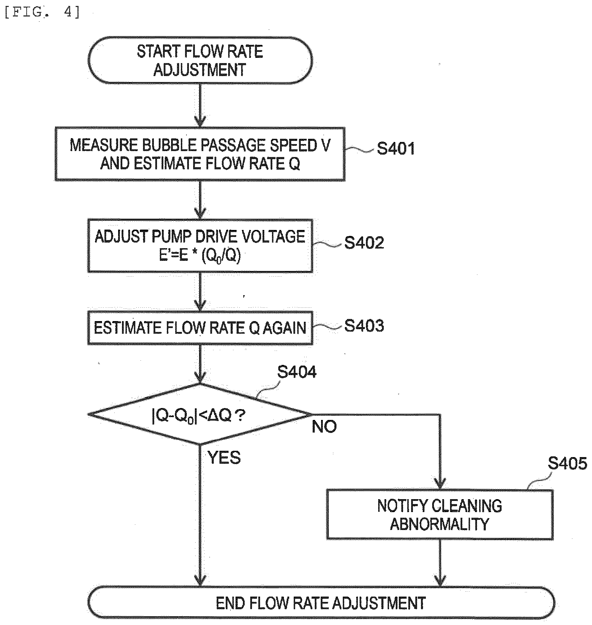

For example, when it is determined in the processing shown in FIG. 3 that a flow rate determination result is out of the normal range (NO in step 305), the flow rate may be adjusted to be within the normal range (flow rate adjustment processing). Even in a case where the processing shown in FIG. 3 is not executed, when an operator (a user) wants to adjust the flow rate, the flow rate adjustment processing may be executed by inputting an instruction to execute the flow rate adjustment processing. FIG. 4 is a flowchart showing the flow rate adjustment processing according to the present embodiment.

### (i) Step 401

The control unit 214 performs the same operations as those in steps 303 and 304, measures a moving speed V of bubbles (a boundary surface between the cleaning liquid and air), and calculates the estimated flow rate Q. When the flow rate adjustment processing is executed after cleaning abnormality notification processing (step 309.in FIG. 3), step 401 may not be executed. In this case, a value of the estimated flow rate Q calculated in step 304 can be used.

### (ii) Step 402

The control unit 214 obtains an adjusted pump drive voltage E' based on a ratio between the estimated flow rate Q and the target flow rate Q₀ and a pre-adjustment pump drive voltage E according to a formula E' = E * (Q₀/Q), and sets the adjusted pump drive voltage as a drive voltage (a pump drive voltage) of the liquid feed pump 202.

### (iii) Step 403

Again, the control unit 214 performs the same operations as those in steps 303 and 304, measures a moving speed V of bubbles (a boundary surface between the cleaning liquid and air), and calculates the estimated flow rate. Q.

### (iv) Step 404

The control unit 214 compares the estimated flow rate Q with the preset target flow rate Q₀ to determine whether the estimated flow rate Q is within a normal range. Specifically, it is determined whether |Q - Q₀| is less than the flow rate error allowable range ΔQ. When |Q - Q₀| < ΔQ (YES in step 404: the flow rate is within the normal range), the flow rate adjustment processing is ended. On the other hand, when |Q - Q₀| ≥ ΔQ (NO in step 404: the flow rate is out of the normal range), the processing proceeds to step 405.

### (v) Step 405

The control unit 214 notifies of a cleaning abnormality (for example, notification by voice or notification by displaying a warning message on a display screen), and ends the processing without performing the dispensing operation. Although the cleaning abnormality is notified when a difference between the estimated flow rate Q and the target flow rate Q₀ is equal to or larger than the flow rate error allowable range ΔQ in the present embodiment, the processing may proceed to step 402 without notifying the cleaning abnormality, and a pump drive voltage adjustment may be performed until the difference between the estimated flow rate Q and the target flow rate Q₀ is less than the flow rate error allowable range ΔQ (loop processing from step 402 to step 404).

### <Modification>

The technique according to the present disclosure is not limited to the above-described embodiment, and includes various modifications. For example, the above-described embodiment has been described in detail to facilitate understanding of the technique according to the present disclosure, and is not necessarily limited to those including all the configurations described above. A part of a configuration according to one embodiment can be replaced with a configuration according to another embodiment, and other components can be added to components according to the present embodiment. In addition, another configuration can be added to, deleted from, or replaced with a part of configurations according to one embodiment. Hereinafter, modifications will be exemplified.

### (i) Modification 1

In the above-described embodiment, the flow rate abnormality determination processing and the flow rate adjustment processing based on a flow rate (an inner cleaning flow rate) of the outer cleaning flow path 207 are described. However, depending on conditions (for example, when a flow rate of the inner cleaning flow path 206 (an inner cleaning flow rate) is more important than the outer cleaning flow rate or when it is desired to control the inner cleaning flow rate), it may, be necessary to determine a flow rate abnormality or adjust a flow rate based on the inner cleaning flow rate.

In such a case, even when drive voltages of the liquid feed pump 202 are the same, pressure losses are different depending on a difference in diameters of pipes or lengths of pipes constituting flow paths, and thus an inner cleaning flow path flow rate Q_{A} and an outer cleaning flow path flow rate Q_{B} are different. On the other hand, what is affected by changes over time is mainly an inner element of the liquid feed pump 202 such as a motor rotation speed, and a diameter and a length of a pipe of an outer flow path do not change. Therefore, it is expected that a correlation between the inner cleaning flow path flow rate Q_{A} and the outer cleaning flow path flow rate Q_{B} does not greatly change over time.

Therefore, before the automatic analyzer 100 is shipped as a product, a correlation coefficient k = Q_{A}/Q_{B} between the inner cleaning flow path flow rate Q_{A} and the outer cleaning flow path flow rate Q_{B} is obtained using a flowmeter or the like, and is stored in an internal memory (not shown) of the control unit 214. In this manner, the inner cleaning flow rate can be estimated based on an estimated value of the outer cleaning flow rate according to an inner cleaning flow rate estimation formula Q_{A} = kQs. By using the estimated inner cleaning flow rate Q_{A}, it is possible to execute the flow rate abnormality determination processing and the flow rate adjustment processing based on the inner cleaning flow rate in the same procedure as in the above-described embodiment.

### (ii) Modification 2

When there are a plurality of dispensing mechanisms and liquid feed pumps, a configuration can be adopted in which flow rate estimation mechanisms are collectively disposed at one place of the cleaning liquid supply flow path 205 most upstream of a cleaning flow path, and the above-described flow rate estimation processing can be applied to such a configuration. The dispensing mechanisms and cleaning mechanisms can be reduced in size by the plurality of flow rate estimation mechanisms at one place.

### (iii) Modification 3

When there are a plurality of dispensing mechanisms and liquid feed pumps, a configuration can be adopted in which flow rate estimation mechanisms are collectively disposed at one place of a waste liquid tank (not shown) connected to the cleaning tank 107 most downstream of a cleaning flow path, and the above-described flow rate estimation processing can be applied to such a configuration. The dispensing mechanisms and cleaning mechanisms can be reduced in size by collecting the plurality of flow rate estimation mechanisms at one place.

### (iv) Modification 4

Although various kinds of processing are executed by one control unit 214 in the above-described embodiment, the processing may be divided and executed by a plurality of control units. The plurality of control units may be incorporated in the automatic analyzer 100 or may be provided outside of the automatic analyzer 100.

### (v) Modification 5

In addition to a mode in which bubbles are generated and a flow rate is estimated based on a moving speed of the bubbles, a flow rate in the outer cleaning flow path 207 may be estimated by a thermal flowmeter including a heater and a temperature sensor or a Coriolis flowmeter using a Coriolis force.

### <Summary>

(i) An automatic analyzer according to the present embodiment performs an operation of operating a liquid feed pump to feed a cleaning liquid to a low-pressure flow path having a low pressure and a low flow rate (for example, a flow path for feeding the cleaning liquid at 10 kPa) constituting at least a part of a flow path, operating a flow rate estimation mechanism (for example, a mechanism that introduces air (bubbles) and estimates a flow rate based on a moving speed of the air, a mechanism that estimates a flow rate using a thermal flowmeter, a mechanism that estimates a flow rate using a Coriolis flowmeter, and the like) installed in the low-pressure flow path to obtain a flow rate estimation value in the low-pressure flow path. Accordingly, detection sensitivity in flow rate measurement in a cleaning system having a low pressure and a low flow rate can be improved in an automatic analyzer including a dispensing mechanism.
(ii) When the mechanism that estimates the flow rate based on the moving speed of the boundary surface between the air (bubbles) and the cleaning liquid is used, an air introduction mechanism is controlled to introduce air into the low-pressure flow path, a movement -of the boundary surface between the air and the cleaning liquid is detected by a sensor, and the flow rate estimation value in the low-pressure flow path is obtained based on a volume of the low-pressure flow path and the moving speed of the boundary surface in the low-pressure flow path calculated based on a detection signal from the sensor. Since a three-way electromagnetic valve can be used as the air introduction mechanism, the flow rate estimation mechanism can be implemented at low cost, and the automatic analyzer can be reduced in size. Here, the boundary surface between the air and the cleaning liquid is generated by introducing the air into an outer cleaning flow path corresponding to the low-pressure flow path.
(iii) As for the flow rate estimation value, a determination may be made to determine whether the flow rate estimation.value is within a preset normal flow rate range, and a determination result may be output, or flow rate adjustment processing for adjusting a flow rate of the liquid feed pump may be executed.
(iv) Functions of the embodiment of the present disclosure can also be implemented by software program codes. In this case, a storage medium that records the program code is provided in a system or a device, and a computer (or CPU or MPU) of the system or the device reads the program code stored in the storage medium. In this case, the program code read from the storage medium implements the functions of the above-described embodiment, and the program code and the storage medium that stores the program code constitute the present disclosure. Examples of the storage medium for supplying such a program code include a flexible disk, a CD-ROM, a DVD-ROM, a hard disk, an optical disk, a magnetooptical disk, a CD-R, a magnetic tape, a nonvolatile memory card, and a ROM.

An operating system (OS) or the like operating on a computer may perform a part or all of actual processing based on an instruction of the program code, and the functions of the above-described embodiment may be implemented by the processing. Further, after the program code read from the storage medium is written in a memory on the computer, a CPU or the like of the computer may perform a part or all of actual processing based on an instruction of the program code, and the functions of the above-described embodiment may be implemented by the processing.

Further, the software program code for implementing the functions of the embodiment may be stored, by distributing via a network, in a storage unit such as a hard disk or a memory of the system or the device or a storage medium such as a CD-RW or a CD-R, and the computer (or CPU or MPU) of the system or the device may read and execute the program code stored in the storage unit or the storage medium at the time of use.

Finally, it is necessary to understand that processes and techniques described here are not essentially related to any specific device, and can be implemented by any appropriate combination of components. Further, various types of devices for general purposes can be used in accordance with teachings described here. It may be advantageous to configure a dedicated device to execute steps of the method described here. Various inventions can be formed by appropriately combining a plurality of components disclosed in the embodiment. For example, several components may be deleted from all components disclosed in the embodiment. Further, components belonging to different embodiments may be appropriately combined. Although the present disclosure has been described in relation to specific examples, the specific examples are used for description only, and are not intended to limit the present disclosure in all viewpoints. It is understood that there are many combinations of hardware, software, and firmware suitable for implementing the present disclosure for those skilled in the present field. For example, the above-described software can be implemented in a wide range of programs or script languages such as assembler, C/C++, perl, Shell, PHP, and Java (registered trademark).

Further, control lines and information lines considered to be necessary for description are shown in the above-described embodiment, and not all control lines and information lines in a product are necessarily shown. All configurations may be connected to one another.

### Reference Signs List

- 100: automatic analyzer
- 101: reagent container
- 102: reagent disk
- 103: reaction disk
- 104: reagent dispensing mechanism
- 105: sample dispensing mechanism
- 106: rack
- 107: cleaning tank
- 108: sample container
- 109: cell
- 110: sample dispensing nozzle (dispensing nozzle)
- 201: cleaning liquid storage container
- 202: liquid feed pump
- 203: sample syringe .
- 204, 208, 211: three-way electromagnetic valve
- 205: cleaning liquid supply flow path
- 206: inner cleaning flow path
- 207: outer cleaning flow path
- 209: dispensing flow path
- 210: two-way electromagnetic valve
- 212, 213: bubble sensor
- 214: control unit

## Claims

1. A control method for an automatic analyzer including a liquid feed pump that feeds, through a flow path, a cleaning liquid to a cleaning mechanism of a dispensing nozzle, and a control unit that controls an operation of the liquid feed pump, the control method comprising:
operating, by the control unit, the liquid feed pump to feed the cleaning liquid to a low-pressure flow path having a low pressure and a low flow rate, the low-pressure flow path constituting at least a part of the flow path; and
operating, by the control unit, a flow rate estimation mechanism provided in the low-pressure flow path to obtain a flow rate estimation value in the low-pressure flow path.

2. The control method according to claim 1, wherein
the flow rate estimation mechanism is an air introduction mechanism that supplies air to the low-pressure flow path, and
the obtaining of the flow rate estimation value in the low-pressure flow path includes
controlling the air introduction mechanism by the control unit, introducing the air into the low-pressure flow path, and generating a boundary surface between the air and the cleaning liquid,
operating, by the control unit, a sensor to detect the boundary surface in the low-pressure flow path,
calculating, by the control unit, and based on a detection signal from the sensor, a moving speed of the boundary surface in the low-pressure flow path, and
estimating, by the control unit, and based on a volume of the low-pressure flow path and the moving speed of the boundary surface, a flow rate of the liquid feed pump in the low-pressure flow path.

3. The control method according to claim 1, wherein
in the low-pressure flow path, the cleaning liquid is fed at a pressure of 10 kPa or less,
the control method further comprising:
determining, by the control unit, whether the flow rate estimation value is within a.preset flow rate normal range, and outputting a determination result.

4. The control method according to claim 1, wherein
in the low-pressure flow path, the cleaning liquid is fed at a pressure of 10 kPa or less,
the control method further comprising:
executing, by the control unit, flow rate adjustment processing of adjusting a flow rate of the liquid feed pump.

5. The control method according to claim 2, wherein
the generating of the boundary surface between the air and the cleaning liquid includes generating, by the control unit, the boundary surface by introducing the air into an outer cleaning flow path corresponding to the low-pressure flow path among flow paths including an inner cleaning flow path configured to supply the cleaning liquid into the dispensing nozzle and the outer cleaning flow path configured to supply the cleaning liquid to a cleaning tank for cleaning an outer wall of the dispensing nozzle.

6. The control method according to claim 2, wherein
the air introduction mechanism includes an atmospheric relief electromagnetic valve; and
the control unit introduces the air into the low-pressure flow path by opening the atmospheric relief electromagnetic valve provided in the low-pressure flow path.

7. The control method according to claim 6, wherein
the obtaining of the flow rate estimation value includes
opening, by the control unit, the atmospheric relief electromagnetic valve and discharging the cleaning liquid filled in a downstream of the atmospheric relief electromagnetic valve,
starting, by the control unit, feeding by the liquid feed pump and moving the boundary surface between the cleaning liquid and the air in the low-pressure flow path,
acquiring, by the control unit, information on movement of the boundary surface detected by the sensor,
calculating, by the control unit, and based on time information on the movement of the boundary surface, the moving speed of the boundary surface, and
calculating, by the control unit, the flow rate estimation value in the low-pressure flow path by multiplying the moving speed by a cross-sectional area of the low-pressure flow path.

8. The control method according to claim 4, wherein
the control unit executes the flow rate adjustment processing by adjusting a drive voltage value of the liquid feed pump based on a ratio between the flow rate estimation value and a given target flow rate value.

9. The control method according to claim 5, further comprising:
calculating, by the control unit, a flow rate estimation value of the liquid feed pump in the outer cleaning flow path;
calculating, by the control unit, and based on a preset correlation formula between a flow rate in the inner cleaning flow path and a flow rate in the outer cleaning flow path, a flow rate estimation value in the inner cleaning flow path based on the flow rate estimation value in the outer cleaning flow path; and
adjusting, by the control unit, and when the flow rate estimation value in the inner cleaning flow path is out of a normal range, a flow rate of the liquid feed pump such that the flow rate estimation value in the inner cleaning flow path coincides with a given target flow rate.

10. The control method according to claim 1, wherein
the control unit calculates the flow rate estimation value of the liquid feed pump in a waste liquid flow path or a cleaning liquid supply flow path that is provided in the flow path.

11. An automatic analyzer comprising:
a dispensing nozzle;
a cleaning liquid tank configured to store a cleaning liquid;
a cleaning mechanism configured to clean the dispensing nozzle;
a low-pressure flow path connected from the cleaning liquid tank to the cleaning mechanism and having a low pressure and a low flow rate;
a liquid feed pump configured to feed the cleaning liquid to the cleaning mechanism through the low-pressure flow path; and
a control unit configured to operate the liquid feed pump and a flow rate estimation mechanism provided in the low-pressure flow path to obtain a flow rate estimation value in the low-pressure flow path.

12. The automatic analyzer according to claim 11, wherein
the flow rate estimation mechanism is an air introduction mechanism that supplies air to the low-pressure flow path, and
the control unit includes
processing of controlling the air introduction mechanism to introduce the air into the low-pressure flow path and generate a boundary surface between the air and the cleaning liquid,
processing of detecting the boundary surface in the low-pressure flow path by operating a sensor,
processing of calculating, based on a detection signal from the sensor, a moving speed of the boundary surface in the low-pressure flow path, and
processing of estimating, based on a volume of the low-pressure flow path and the moving speed of the boundary surface, a flow rate of the liquid feed pump in the low-pressure flow path.

13. The automatic analyzer according to claim 11, wherein
in the low-pressure flow path, the cleaning liquid is fed at a pressure of 10 kPa or less, and
the control unit further executes processing of determining whether the flow rate estimation value is within a preset flow rate normal range and outputting a determination result.

14. The automatic analyzer according to claim 11, wherein
in the low-pressure flow path, the cleaning liquid is fed at a pressure of 10 kPa or less, and
the control unit further executes flow rate adjustment processing of adjusting a flow rate of the liquid feed pump.

15. The automatic analyzer according to claim 12, wherein
the control unit includes
processing of generating the boundary surface by introducing the air into an outer cleaning flow path corresponding to the low-pressure flow path among flow paths including an inner cleaning flow path configured to supply the cleaning liquid into the dispensing nozzle and the outer cleaning flow path configured to supply the cleaning liquid to a cleaning tank for cleaning an outer wall of the dispensing nozzle,
processing of calculating a flow rate estimation value of the liquid feed pump in the outer cleaning flow path,
processing of calculating, based on a preset correlation formula between a flow rate in the inner cleaning flow path and a flow rate in the outer cleaning flow path, a flow rate estimation value in the inner cleaning flow path based on the flow rate estimation value in the outer cleaning flow path, and
processing of adjusting, when the flow rate estimation value in the inner cleaning flow path is out of a normal range, a flow rate of the liquid feed pump such that the flow rate estimation value in the inner cleaning flow path coincides with a given target flow rate.

## Amended claims

### Amended claims under Art. 19.1 PCT

1. A control method for an automatic analyzer including a liquid feed pump that feeds, through a flow path, a cleaning liquid to a cleaning mechanism of a dispensing nozzle, and a control unit that controls an operation of the liquid feed pump, the control method comprising:
operating, by the control unit, the liquid feed pump to feed the cleaning liquid to a low-pressure flow path having a low pressure and a low flow rate, the low-pressure flow path constituting at least a part of the flow path; and
operating, by the control unit, a flow rate estimation mechanism provided in the low-pressure flow path to obtain a flow rate estimation value in the low-pressure flow path, wherein
the flow rate estimation mechanism is an air introduction mechanism that supplies air to the low-pressure flow path, and
the obtaining of the flow rate estimation value in the low-pressure flow path includes
controlling, by the control unit, the air introduction mechanism to introduce the air into the low-pressure flow path, and generating a boundary surface between the air and the cleaning liquid,
operating, by the control unit, a sensor to detect the boundary surface in the low-pressure flow path,
calculating, by the control unit, a moving speed of the boundary surface in the low-pressure flow path based on a detection signal from the sensor, and
estimating, by the control unit, a flow rate of the liquid feed pump in the low-pressure flow path based on a volume of the low-pressure flow path and the moving speed of the boundary surface.

3. The control method according to claim 1, wherein
in the low-pressure flow path, the cleaning liquid is fed at a pressure of 10 kPa or less, and
the control method further comprises
determining, by the control unit, whether the flow rate estimation value is within a preset flow rate normal range, and outputting a determination result.

4. The control method according to claim 1, wherein
in the low-pressure flow path, the cleaning liquid is fed at a pressure of 10 kPa or less, and
the control method further comprises
executing, by the control unit, flow rate adjustment processing of adjusting a flow rate of the liquid feed pump.

5. The control method according to claim 1, wherein
the generating of the boundary surface between the air and the cleaning liquid includes generating, by the control unit, the boundary surface by introducing the air into an outer cleaning flow path corresponding to the low-pressure flow path among the flow path including an inner cleaning flow path for supplying the cleaning liquid into the dispensing nozzle and the outer cleaning flow path for supplying the cleaning liquid to a cleaning tank for cleaning an outer wall of the dispensing nozzle.

6. The control method according to claim 1, wherein
the air introduction mechanism includes an atmospheric relief electromagnetic valve, and
the control unit introduces the air into the low-pressure flow path by opening the atmospheric relief electromagnetic valve provided in the low-pressure flow path.

7. The control method according to claim 6, wherein
the obtaining of the flow rate estimation value includes
opening, by the control unit, the atmospheric relief electromagnetic valve and discharging the cleaning liquid filled in downstream of the atmospheric relief electromagnetic valve,
starting, by the control unit, feeding by the liquid feed pump and moving the boundary surface between the cleaning liquid and the air in the low-pressure flow path,
acquiring, by the control unit, information on a movement of the boundary surface detected by the sensor,
calculating, by the control unit, the moving speed of the boundary surface based on time information on the movement of the boundary surface, and
calculating, by the control unit, the flow rate estimation value in the low-pressure flow path by multiplying the moving speed by a cross-sectional area of the low-pressure flow path.

8. The control method according to claim 4, wherein
the control unit executes the flow rate adjustment processing by adjusting a drive voltage value of the liquid feed pump based on a ratio between the flow rate estimation value and a given target flow rate value.

9. The control method according to claim 5, further comprising:
calculating, by the control unit, a flow rate estimation value of the liquid feed pump in the outer cleaning flow path;
calculating, by the control unit, a flow rate estimation value in the inner cleaning flow path based on the flow rate estimation value in the outer cleaning flow path according to a preset correlation formula between a flow rate in the inner cleaning flow path and a flow rate in the outer cleaning flow path; and
adjusting, by the control unit, a flow rate of the liquid feed pump such that the flow rate estimation value in the inner cleaning flow path coincides with a given target flow rate when the flow rate estimation value in the inner cleaning flow path is out of a normal range.

10. The control method according to claim 1, wherein
the control unit calculates the flow rate estimation value of the liquid feed pump in a waste liquid flow path or a cleaning liquid supply flow path that is provided in the flow path.

11. An automatic analyzer comprising:
a dispensing nozzle;
a cleaning liquid tank configured to store a cleaning liquid;
a cleaning mechanism configured to clean the dispensing nozzle;
a low-pressure flow path connected from the cleaning liquid tank to the cleaning mechanism and having a low pressure and a low flow rate;
a liquid feed pump configured to feed the cleaning liquid to the cleaning mechanism through the low-pressure flow path; and
a control unit configured to operate the liquid feed pump and a flow rate estimation mechanism provided in the low-pressure flow path to obtain a flow rate estimation value in the low-pressure flow path, wherein
the flow rate estimation mechanism is an air introduction mechanism that supplies air to the low-pressure flow path, and
the control unit is configured to execute
processing of controlling the air introduction mechanism to introduce the air into the low-pressure flow path and generating a boundary surface between the air and the cleaning liquid,
processing of operating a sensor to detect the boundary surface in the low-pressure flow path,
processing of calculating a moving speed of the boundary surface in the low-pressure flow path based on a detection signal from the sensor, and
processing of estimating a flow rate of the liquid feed pump in the low-pressure flow path based on a volume of the low-pressure flow path and the moving speed of the boundary surface.

13. The automatic analyzer according to claim 11, wherein
in the low-pressure flow path, the cleaning liquid is fed at a pressure of 10 kPa or less, and
the control unit further executes processing of determining whether the flow rate estimation value is within a preset flow rate normal range and outputting a determination result.

14. The automatic analyzer according to claim 11, wherein
in the low-pressure flow path, the cleaning liquid is fed at a pressure of 10 kPa or less, and
the control unit further executes flow rate adjustment processing of adjusting a flow rate of the liquid feed pump.

15. The automatic analyzer according to claim 11, wherein
the control unit is configured to execute
processing of generating the boundary surface by introducing the air into an outer cleaning flow path corresponding to the low-pressure flow path among a flow path including an inner cleaning flow path for supplying the cleaning liquid into the dispensing nozzle and the outer cleaning flow path for supplying the cleaning liquid to a cleaning tank for cleaning an outer wall of the dispensing nozzle,
processing of calculating a flow rate estimation value of the liquid feed pump in the outer cleaning flow path,
processing of calculating a flow rate estimation value in the inner cleaning flow path based on the flow rate estimation value in the outer cleaning flow path according to a preset correlation formula between a flow rate in the inner cleaning flow path and a flow rate in the outer cleaning flow path, and
processing of adjusting a flow rate of the liquid feed pump such that the flow rate estimation value in the inner cleaning flow path coincides with a given target flow rate when the flow rate estimation value in the inner cleaning flow path is out of a normal range.

Statement under Art. 19.1 PCT
1. Brief Statement based on Article 19(1) A difference between the present invention and cited documents 1 and 2 is clarified by this amendment. The amended present invention is as described in the amendment under Article 19. In the international research report, it is recognized that the present invention does not have inventive steps based on a combination of cited document 1 (JPH08-194004A) and cited document 2 (JP2920679B). However, cited document 1 only discloses a general automatic analyzer, and does not suggest the necessity of a flow rate estimation and a flow rate estimation in a low-pressure flow path. In the first place, a main object of cited document 1 is to clear a limit volume to reduce an amount of a sample and reduce a usage amount of a reagent. Different from the present invention, the invention according to cited document 1 is not related to a cleaning system. On the other hand, cited document 2 discloses a measurement in a "normal" transparent pipe which is not a low-pressure flow path in relation to a measurement of a movement time of a boundary surface between a bubble and a liquid, and does not suggest a measurement of a movement time in a flow path (a low-pressure flow path) having a low pressure and a low flow rate. Therefore, when the technique related to the measurement of the movement time of the boundary surface between the bubble and the liquid disclosed in cited document 2 is applied to the automatic analyzer disclosed in cited document 1, it is very questionable whether the low-pressure flow path should be applied to which flow path or whether the measurement of the movement time according to cited document 2 can be meaningfully applied to cited document 1. Since an object of cited document 1 is to supply a diluted sample, a person (a person skilled in the art) who has ordinary knowledge in the technical field would think to apply the technique of measuring a movement time disclosed in cited document 2 to a flow path related to a sample supply system, which is not related to a cleaning system. However, it is unclear what technical meaning such an application has, and when there is no technical advantage, a person skilled in the art would not apply the technique according to cited document 2 to the automatic analyzer according to cited document 1 in the first place. As described above, a person skilled in the art would not combine cited document 1 and cited document 2, and even when cited document 1 and cited document 2 are combined, the amended present invention cannot be conceived, and it is considered that the present invention has inventive steps.
